(19) **Europäisches Patentamt European Patent Office Office européen des brevets**

(11) **EP 4 700 602 A1**

(12) **EUROPEAN PATENT APPLICATION**
published in accordance with Art. 153(4) EPC

(43) Date of publication:
25.02.2026 Bulletin 2026/09

(21) Application number: 25800313.6

(22) Date of filing: 30.04.2025

(51) International Patent Classification (IPC):
*G06F 16/33* (2025.01)

(86) International application number:
PCT/CN2025/092295

(87) International publication number:
WO 2026/007520 (08.01.2026 Gazette 2026/02)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: 03.07.2024 CN 202410881265

(71) Applicant: Lbatterycloud Co. Ltd.
Yantai, Shandong 264000 (CN)

(72) Inventors:
• **CI, Song**
Yantai
Shandong 264000 (CN)
• **ZHANG, Ming**
Yantai
Shandong 264000 (CN)
• **LI, Chaofan**
Yantai
Shandong 264000 (CN)
• **LI, Kai**
Yantai
Shandong 264000 (CN)
• **BAI, Xuheng**
Yantai
Shandong 264000 (CN)
• **LI, Xuefeng**
Yantai
Shandong 264000 (CN)
• **WANG, Yunfang**
Yantai
Shandong 264000 (CN)
• **GAO, Hong**
Yantai
Shandong 264000 (CN)

(74) Representative: **Chung, Hoi Kan**
**Mandarin IP Limited**
**7 Cherry Trees**
**Great Shelford**
**Cambridge CB22 5XA (GB)**

(54) **NATURAL LANGUAGE INTERACTION-BASED METHOD FOR EXTRACTING PARAMETER OF ENERGY STORAGE MANAGEMENT SYSTEM**

(57) The present disclosure discloses a parameter extraction method for an energy storage management system based on natural language interaction, and belongs to the technical field of energy storage for new energy power systems, comprising: dividing parameter types, collecting natural language interaction corpora, labeling parameters, constructing a word segmentation set, coding natural language interaction corpora, calculating prior probabilities and conditional probabilities, persisting the prior probabilities and the conditional probabilities, inputting new corpora, loading the prior probabilities and the conditional probabilities, calculating posterior probabilities according to a naive Bayes formula, and extracting parameters corresponding to a maximum value of the posterior probabilities. According to the present disclosure, parameters are extracted using a natural language interaction manner, which reduces a threshold of use of conventional energy storage management systems, and solves the problem of poor universality of parameter extraction methods; the accuracy and extensibility of conventional parameter extraction methods for the energy storage management systems are improved by manual parameter labeling; and the problem of poor robustness of the conventional parameter extraction methods for the energy storage management systems is solved.

EP 4 700 602 A1

FIG. 1

**Description**

TECHNICAL FIELD

The present disclosure belongs to the technical field of energy storage for new energy power systems, in particular to a parameter extraction method for an energy storage management system based on natural language interaction.

BACKGROUND

As the installed capacity of new energy power generation continues to expand, the proportion of new energy power generation in power grids is higher and higher, but due to the small unit capacity, large number, and dispersed spots of new energy power generation, and the intermittency, volatility, randomness, and other significant characteristics, a high proportion of new energy grid connection tends to cause unprecedented challenges for supply and demand balancing, safety and stability control, and the like of power systems. Energy storage systems are a key link in regulating supply and demand imbalances, energy management and optimization of new energy power generation and power systems. The composition of an energy storage system typically includes an energy storage device, an energy converter, control system connection equipment, and ancillary equipment. To guarantee safe, stable, and efficient operations of the energy storage system, accurate management and control of each portion of the energy storage system are required, which requires a user or technician of the energy storage management system to be able to input requirements including time, locations, and action parameters according to management, operation and maintenance requirements to achieve accurate management and control of the energy storage system.

A current conventional parameter extraction method for an energy storage management system mainly has the following drawbacks: (1) complex operations: the current conventional parameter extraction method for the energy storage management system generally needs to select among a large number of parameters of an interactive interface and has a threshold of use; (2) poor universality: the current conventional parameter selection for the energy storage management system is generally isolated from each other between different functions, and there is no correlation between different functions; (3) poor extensibility: when there are new functions or new existing function parameters, the conventional parameter extraction method for the energy storage management system generally requires redesign of the parameter structure and does not have extensibility; and (4) poor robustness: the conventional parameter extraction method for the energy storage management system generally fails to handle input errors or limit crossings, and does not function properly when abnormal situations occur.

SUMMARY

With respect to the problem of parameter extraction in an energy storage management system, the present disclosure provides a parameter extraction method for an energy storage management system based on natural language interaction; through the parameter extraction method of natural language interaction, the operation complexity of the energy storage management system is reduced, and the threshold of use is reduced; the universality among management functions is increased by standard coding of different task, function, and type parameters; the accuracy and extensibility of the parameter extraction method are improved by manual parameter labeling; and the stability of system operations is improved by machine learning fuzzy processing techniques.

A parameter extraction method for an energy storage management system based on natural language interaction, including:

S1: dividing and organizing parameter types, where for a parameter type set $C = (C^1, C^2, \cdots, C^m)$, $m$ represents a number of types after division; $C^i$ represents the $i$ th parameter type set after division, for the parameter set

$$C^i = \left( c_1^i, c_2^i, \cdots, c_{n_i}^i \right)$$

of the $i$ th parameter type set, where $c_j^i$ is the $j$ th parameter of the parameter set $C^i$, and $n_i$ is a number of elements of the parameter set $C^i$, $i = 1,2, \cdots, m, j = 1,2, \cdots, n_i$;

S2: collecting natural language interaction corpora, each natural language interaction corpus corresponding to one label vector $b = (b_1, b_2, \cdots, b_m)$ containing m parameter values, where $b_i$ is a parameter value corresponding to the $i$ th parameter type of a current sentence;

S3: labeling parameters, where each parameter type is labeled;

S4: constructing a word segmentation set, for the word segmentation set $W = (w_1, w_2, \cdots, w_L)$, where $w_l$ is the $l$ th element of the word segmentation set $W$, $l = 1,2, \cdots, L$;

S5: coding the natural language interaction corpora, initializing a coding vector $v$ with a 0 vector having a length of $L$ for each natural language interaction corpus, setting $v_l = 1$ if $w_l$ is in the natural language interaction corpora, and

otherwise, setting $v_l = 0$, where $v_l$ is the lth element of the coding vector $v$;

S6: constructing data sets;

S7: calculating a prior probability matrix $PB$ of all parameters, where $PB$ is a two-dimensional 0 matrix of row $m$ and column $\max\limits_{1 \le i \le m}(n_i)$;

S8: calculating a conditional probability matrix $PBV$ of occurrence of each word in the natural language interaction corpora, $PBV$ being a three-dimensional matrix of $m \times \max\limits_{1 \le i \le m}(n_i) \times L$;

S9: persistently storing the prior probability matrix PB and the conditional probability matrix PBV;

S10: inputting a new natural language interaction corpus, and obtaining a coding vector v' of a natural language interaction corpus to be predicted;

S11: loading the prior probability matrix PB and the conditional probability matrix $PBV$;

S12: calculating a parameter vector $b' = (b_j^1{}', b_j^2{}', \cdots, b_j^m{}')$; and

S13: outputting the parameter vector b'.

Further, specific steps of constructing the data sets in S6 include:

S6.1: initializing a coding matrix $V$ and a label matrix $B$ of the natural language interaction corpora, where the coding matrix $V$ is a 0 matrix of row $K$ and column $L$, and each row represents a code of one natural language interaction corpus; the label matrix $B$ is a 0 matrix of row $K$ and column $m$, and each row represents a parameter value label vector of one natural language interaction corpus; where $k = 1, 2, \cdots, K$, $K$ is a number of the natural language interaction corpora; and

S6.2: coding the $k$th corpus using a natural language interaction corpus coding method in S5 and assigning a value to row $k$ of the coding matrix $V$; and labeling the kth natural language interaction corpus using a parameter labeling method in S3 and assigning a value to row $k$ of the matrix $B$.

Further, a process of calculating the prior probability matrix $PB$ of all parameters in S7 is specifically:

calculating prior probabilities of the $j$th parameter in the parameter type $i$ according to a Laplacian correction method, the calculation formula being:

$$PB_{ij} = p(b_j^i) = \frac{N(B_i = b_j^i) + 1}{K + m}$$

where $PB_{ij}$ is an element of row $i$ and column $j$ of the vector matrix $PB$, $p(b_j^i)$ represents a probability that all rows of the matrix $B$ contain the element $b_j^i$, $N(B_i = b_j^i)$ is a number of elements equal to $b_j^i$ in column $i$ of the matrix $B$, $K$ is a number of the natural language interaction corpora, and m is a number of columns of the label matrix $B$.

Further, the calculation formula for calculating the conditional probability matrix $PBV$ for the occurrence of each word in the natural language interaction corpora in S8 is specifically:

$$PBV_{ijl} = p(w_l | b_j^i) = \frac{N(V_l = 1) + 1}{N(B_i = b_j^i) + L}$$

where $PBV_{ijl}$ is the element of the matrix $PBV$ at position $(i, j, l)$, $p(w_l | b_j^i)$ represents a conditional probability of occurrence of word $w_l$ in the natural language interaction corpora of the labeling parameter $b_j^i$, $N(V_l = 1)$ represents a number of elements equal to 1 in column $l$ of the matrix $V$, and $L$ is a number of columns of the coding matrix $V$.

Further, a parameter vector $b^{\prime} = (b_j^1{}',b_j^2{}',\cdots,b_j^m{}')$ is calculated in S12, $i = 1,2,\cdots,m,$ where the calculation formula of $b_j^i{}'$ is:

$$b_j^i{}' = arg \max_{j=1,2,\cdots n_i}(\prod_{v'(l)=1} PBV_{ijl} \cdot PB_{ij}).$$

Further, according to a naive Bayes formula, a derivation process of the calculation formula of $b_j^i{}'$ is:

$$b_{j'}^i = arg \max_{j=1,2,\cdots n_i}\left(p(b_j^i|v')\right) = arg \max_{j=1,2,\cdots n_i}\left(\frac{p(v'|b_j^i)\cdot p(b_j^i)}{p(v')}\right)$$

$$= arg \max_{j=1,2,\cdots n_i}\left(\frac{\prod_{v'(l)=1} PBV_{ijl}\cdot PB_{ij}}{p(v')}\right)$$

$$= arg \max_{j=1,2,\cdots n_i}\left(\prod_{v'(l)=1} PBV_{ijl}\cdot PB_{ij}\right)$$

where $p\left(b_j^i|v'\right)$ represents a probability of a parameter selection $b_j^i$ of a parameter type $i$ when the coding vector of the natural language interaction corpora is $v'$, and $p(v')$ represents a probability when the coding vector of the natural language interaction corpora is $v'$.

Further, during parameter labeling in S3, manual parameter value labeling is performed for each parameter type.

Further, when the word segmentation set is constructed in S4, word segmentation is performed on all natural language interaction corpora using a tokenizer, and duplicate removal is performed after word segmentation to obtain the word segmentation set $W$.

A computer device, comprising a memory, a processor, and a computer program stored on the memory and executable on the processor, where the processor executes the computer program to implement a parameter extraction method for an energy storage management system based on natural language interaction.

A computer-readable storage medium having a computer program stored thereon, the computer program, when executed by a processor, implementing the parameter extraction method for the energy storage management system based on natural language interaction.

Compared with the prior art, the present disclosure has at least the following beneficial effects:

According to the present disclosure, parameters are extracted using a natural language interaction manner, which reduces a threshold of use of conventional energy storage management systems, and solves the problem of poor universality of parameter extraction methods; the accuracy and extensibility of conventional parameter extraction methods for the energy storage management systems are improved by manual parameter labeling; and the problem of poor robustness of the conventional parameter extraction methods for the energy storage management systems is solved.

BRIEF DESCRIPTION OF THE DRAWINGS

FIG. 1 is a flow structure diagram of the present disclosure;
FIG. 2 is a conditional probability heat map of various word segments with respect to various parameters within one parameter type set in the present disclosure; and
FIG. 3 is a schematic diagram of extraction accuracy of various types of parameters in the present disclosure.

DETAILED DESCRIPTION OF THE EMBODIMENTS

The principles and features of the present disclosure are described below with reference to all accompanying drawings, and the examples given are only used to explain the present disclosure and are not intended to limit the scope of the present disclosure.

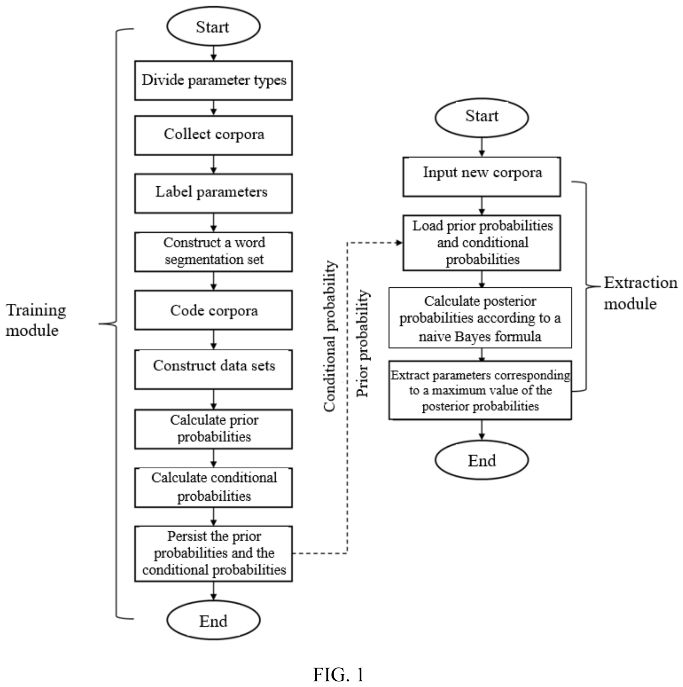

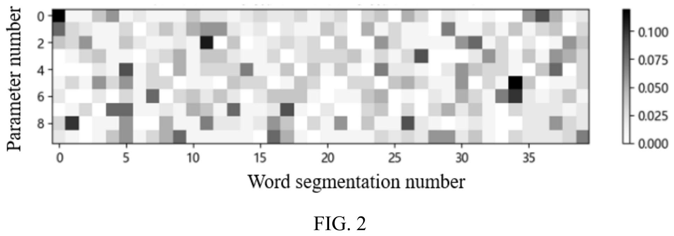

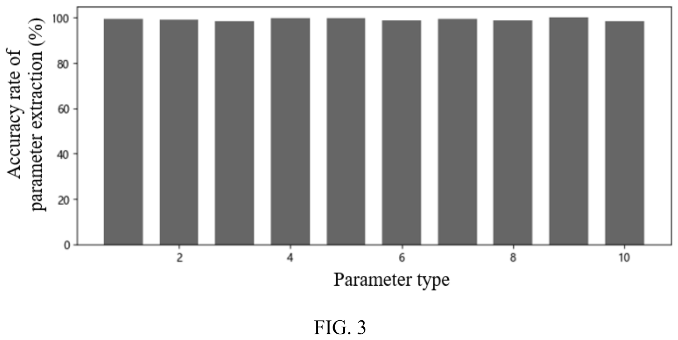

Referring to FIGS. 1-3, an embodiment of the present disclosure discloses a parameter extraction method for an energy storage management system based on natural language interaction, specifically including:

S1: Dividing and organizing parameter types.

Specifically, parameter types are divided according to the use and working logics of the energy storage management system, the parameter types are abstracted from actual application scenarios, each type of parameters is enumerated according to functional requirements, for a parameter type set $C = (C^1, C^2, \cdots, C^m)$, where $C^i$ represents the $i$th parameter type set after division, i = 1,2, $\cdots$, $m$, and $m$ represents a number of types after division; and for a parameter set $C^i = (c_1^i, c_2^i, \cdots, c_{n_i}^i)$ of the $i$th parameter type set, where $c_j^i$ is the $j$th parameter of the parameter set $C^i$, $n_i$ is a number of elements of the parameter set $C^i$, $j$ = 1,2, $\cdots$, $n_j$.

S2: Collecting natural language interaction corpora, each natural language interaction corpus corresponding to one label vector $b = (b_1, b_2, \cdots, b_m)$, containing $m$ parameter values, where $b_i$ is a parameter value corresponding to the $i$th parameter type of a current sentence.

Specifically, natural language descriptions of requirement parameters by users or operation and maintenance engineers to use the energy storage management system, i.e., natural language interaction corpora, are collected, and each natural language interaction corpus corresponds to one accurate, complete, and implementable usage requirement comprising a plurality of parameters.

S3: Labeling parameters.

Specifically, the natural language interaction corpora are labeled with values in the parameter types divided in S1, i.e., manual parameter value labeling is performed for each parameter type. A process of turning into a label vector is actually parameter labeling in S3.

For example, parameter types may be divided as: project name, container number, cluster number, task name...

Given corpora: Please analyze the temperature consistency of battery modules in cluster 4 of container #10 of project A.

Labeling results: (A, 10, 4, temperature consistency of modules,...).

S4: Constructing a word segmentation set.

Specifically, a tokenizer is used to perform word segmentation on all natural language interaction corpora, and duplicate removal is performed after word segmentation to obtain a word segmentation set $W$, $W = (w_1, w_2, \cdots, w_L)$, where $l$ = 1,2, $\cdots$, $L$, $w_l$ is the lth element of the word segmentation set $W$. The tokenizer in this embodiment may be selected from a Chinese tokenizer, such as a Jieba tokenizer, or a custom tokenizer.

S5: Coding the natural language interaction corpora.

Specifically, for each natural language interaction corpus, a coding vector $v$ is initialized with a 0 vector having a length of $L$, set $v_l$ = 1 if $w_l$ is in the natural language interaction corpora, and otherwise, set $v_l$ = 0, where $v_l$ is the lth element of the coding vector $v$ of the natural language interaction corpora.

S6: Constructing data sets.

Specifically, S6 specifically includes the following steps:

S6.1: initializing a coding matrix $V$ and a label matrix $B$ of the natural language interaction corpora, where the coding matrix $V$ is a 0 matrix of row K and column $L$, and each row represents a code of one natural language interaction corpus; the label matrix $B$ is a 0 matrix of row K and column $m$, and each row represents a parameter value label vector of one natural language interaction corpus, $k$ = 1,2, $\cdots$, $K$; and

S6.2: coding the kth corpus using a natural language interaction corpus coding method in S5 and assigning a value to row $k$ of the coding matrix $V$; and labeling the kth natural language interaction corpus using a parameter labeling method in S3 and assigning a value to row $k$ of the label matrix $B$, where $k$ is a number of the natural language interaction corpora, it can also be understood that K is a number of rows of the coding matrix $V$ or the label matrix $B$.

S7: Calculating a prior probability matrix $PB$ of all parameters, where $PB$ is a two-dimensional 0 matrix of row $m$ and column $\max\limits_{1 \leq i \leq m}(n_i)$.

Specifically, the prior probability vector $pb_j^i$ of each parameter in the parameter type $i$ is calculated according to a Laplacian correction method, and the calculation formula for $pb_j^i$ is:

$$pb_j^i = p(b_j^i) = \frac{N(B_i = b_j^i) + 1}{K + m};$$

where $pb_j^i$ is the jth element of the matrix $PB$, $j = 1, 2, \cdots, n_i$, $p(b_j^i)$ represents a probability that all rows of the matrix $B$ contain the element $b_j^i$, $N(B_i = b_j^i)$ is a number of elements equal to $b_j^i$ in column $i$ of the matrix $B$, $K$ is a number of the natural language interaction corpora, and m is a number of columns of the label matrix B.

S8: Calculating a conditional probability matrix $PBV$ of occurrence of each word in the natural language interaction corpora, $PBV$ being a three-dimensional matrix of $m \times \max\limits_{1 \le i \le m}(n_i) \times L$.

Specifically, the calculation formula for the conditional probability matrix for the occurrence of each word in the natural language interaction corpora is:

$$PBV_{ijl} = p(w_l | b_j^i) = \frac{N(V_l = 1) + 1}{N(B_i = b_j^i) + L};$$

where $PBV_{ijl}$ is the element of the matrix $PBV$ at position $(i, j, l)$, $p(w_l | b_j^i)$ represents a conditional probability of occurrence of word $w_l$ in the natural language interaction corpora of the labeling parameter $b_j^i$, $N(V_l = 1)$ represents a number of elements equal to 1 in column $l$ of the matrix $V$, and $L$ is a number of columns of the coding matrix $V$, $i = 1, 2, \cdots, m$, $j = 1, 2, \cdots, n_i$, $l = 1, 2, \cdots, L$.

S9: Persistently storing the prior probability matrix PB and the conditional probability matrix PBV.

S10: Inputting a new natural language interaction corpus, coding the natural language interaction corpus using S5, and obtaining a coding vector v' of a natural language interaction corpus to be predicted.

S11: Loading the prior probability matrix PB and the conditional probability matrix PBV.

S12: Calculating a parameter vector $b' = (b_j^1{}', b_j^2{}', \cdots, b_j^m{}')$; $i = 1, 2, \cdots, m$.

Specifically, the calculation formula for $b_j^i{}'$ is:

$$b_j^i{}' = arg \max\limits_{j=1,2,\cdots n_i} (\prod\nolimits_{v'(l)=1} PBV_{ijl} \cdot PB_{ij}).$$

The posterior probability is calculated according to the naive Bayes formula, i.e., a derivation process of the calculation formula for $b_j^i{}'$ is:

$$b_{j'}^i = arg \max\limits_{j=1,2,\cdots n_i} \left( p(b_j^i | v') \right) = arg \max\limits_{j=1,2,\cdots n_i} \left( \frac{p(v'|b_j^i) \cdot p(b_j^i)}{p(v')} \right)$$

$$= arg \max\limits_{j=1,2,\cdots n_i} \left( \frac{\prod_{v'(l)=1} PBV_{ijl} \cdot PB_{ij}}{p(v')} \right)$$

$$= arg \max\limits_{j=1,2,\cdots n_i} \left( \prod\limits_{v'(l)=1} PBV_{ijl} \cdot PB_{ij} \right)$$

where $p(b_j^i | v')$ represents a probability of a parameter selection $b_j^i$ of a parameter type $i$ when the coding vector of the natural language interaction corpora is *v'*, and *p(v')* represents a probability when the coding vector of the natural language interaction corpora is *v'*.

S13: Outputting the parameter vector *b'*.

Specifically, the parameter corresponding to the maximum value of the posterior probability in each parameter type, i.e., the output parameter vector *b'*, is extracted.

In the present embodiment, S1-S9 are performed by a training module, and S10-S13 are performed by an extraction module, as shown in FIG. 1.

According to the present disclosure, parameters are extracted using a natural language interaction manner, which reduces a threshold of use of conventional energy storage management systems, and solves the problem of poor universality of parameter extraction methods; the accuracy and extensibility of conventional parameter extraction methods for the energy storage management systems are improved by manual parameter labeling; and the problem of poor robustness of the conventional parameter extraction methods for the energy storage management systems is solved.

Embodiments of the present disclosure also disclose a computer device.

A computer device, comprising a memory, a processor, and a computer program stored on the memory and executable on the processor, where the processor executes the computer program to implement a parameter extraction method for an energy storage management system based on natural language interaction.

Embodiments of the present disclosure also disclose a computer-readable storage medium.

A computer-readable storage medium having a computer program stored thereon, the computer program, when executed by a processor, implementing the parameter extraction method for the energy storage management system based on natural language interaction.

The above description is only a preferred embodiment of the present disclosure and is not intended to limit the present disclosure. Any modifications, equivalent substitutions, and improvements made within the spirit and principles of the present disclosure should be included within the scope of protection of the present disclosure.

**Claims**

1. A parameter extraction method for an energy storage management system based on natural language interaction, comprising:

   S1: dividing and organizing parameter types, wherein the parameter types are divided according to use and work logics of the energy storage management system, the parameter types are abstracted from actual application scenarios, each type of parameters is enumerated according to functional requirements, and the parameter types are divided and organized as: project name, container number, cluster number, and task name; for a parameter type set $C = (C^1, C^2, \cdots, C^m)$, m represents a number of types after division; $C^i$ represents the ith parameter type set after division, in the parameter set $C^i = (c_1^i, c_2^i, \cdots, c_{n_i}^i)$ of the ith parameter type set, wherein $c_j^i$ is the jth parameter of the parameter set $C^i$, and $n_i$ is a number of elements of the parameter set $C^i$ $i = 1,2, \cdots, m$, $j = 1,2, \cdots, n_i$;

   S2: collecting natural language interaction corpora, each natural language interaction corpus corresponding to one label vector $b = (b_1, b_2, \cdots, b_m)$ containing m parameter values, wherein $b_i$ is a parameter value corresponding to the ith parameter type of a current sentence;

   S3: labeling parameters, wherein each parameter type is labeled;

   S4: constructing a word segmentation set, for the word segmentation set $W = (w_1, w_2, \cdots, w_L)$, wherein $w_l$ is the lth element of the word segmentation set $W$, $l = 1,2, \cdots, L$;

   S5: coding the natural language interaction corpora, initializing a coding vector $v$ with a 0 vector having a length of $L$ for each natural language interaction corpus, setting $v_l = 1$ if $w_l$ is in the natural language interaction corpora, and otherwise, setting $v_l = 0$, wherein $v_l$ is the lth element of the coding vector $v$;

   S6: constructing data sets;

   S7: calculating a prior probability matrix $PB$ of all parameters, wherein $PB$ is a two-dimensional 0 matrix of row $m$ and column $\max_{1 \le i \le m}(n_i)$;

   S8: calculating a conditional probability matrix $PBV$ of occurrence of each word in the natural language interaction corpora, $PBV$ being a three-dimensional matrix of $m \times \max_{1 \le i \le m}(n_i) \times L$;

   S9: persistently storing the prior probability matrix PB and the conditional probability matrix PBV;

   S10: inputting a new natural language interaction corpus, and obtaining a coding vector v' of a natural language interaction corpus to be predicted;

S11: loading the prior probability matrix PB and the conditional probability matrix PBV;

S12: calculating a parameter vector $b' = (b_{j'}^1, b_{j'}^2, \cdots, b_{j'}^m)$ ; and

S13: outputting the parameter vector b'.

2. The parameter extraction method for the energy storage management system based on natural language interaction according to claim 1, wherein specific steps of constructing the data sets in S6 comprise:

S6.1: initializing a coding matrix V and a label matrix B of the natural language interaction corpora, wherein the coding matrix V is a 0 matrix of row K and column L, and each row represents a code of one natural language interaction corpus; the label matrix B is a 0 matrix of row K and column m, and each row represents a parameter value label vector of one natural language interaction corpus; wherein $k = 1,2, \cdots, K$, K is a number of the natural language interaction corpora; and

S6.2: coding the kth corpus using a natural language interaction corpus coding method in S5 and assigning a value to row k of the coding matrix V; and labeling the kth natural language interaction corpus using a parameter labeling method in S3 and assigning a value to row k of the matrix B.

3. The parameter extraction method for the energy storage management system based on natural language interaction according to claim 1, wherein a process of calculating the prior probability matrix PB of all parameters in S7 is specifically:

calculating prior probabilities of the jth parameter in the parameter type i according to a Laplacian correction method, the calculation formula being:

$$PB_{ij} = p(b_j^i) = \frac{N(B_i = b_j^i) + 1}{K + m}$$

wherein $PB_{ij}$ is an element of row i and column j of the vector matrix PB, $p(b_j^i)$ represents a probability that all rows of the matrix B contain the element $b_j^i$, $N(B_i = b_j^i)$ is a number of elements equal to $b_j^i$ in column i of the matrix B, K is a number of the natural language interaction corpora, and m is a number of columns of the label matrix B.

4. The parameter extraction method for the energy storage management system based on natural language interaction according to claim 3, wherein the calculation formula for calculating the conditional probability matrix PBV for the occurrence of each word in the natural language interaction corpora in S8 is specifically:

$$PBV_{ijl} = p(w_l|b_j^i) = \frac{N(V_l = 1) + 1}{N(B_i = b_j^i) + L}$$

wherein $PBV_{ijl}$ is the element of the matrix PBV at position (i, j, l), $p(w_l|b_j^i)$ represents a conditional probability of occurrence of word $w_l$ in the natural language interaction corpora of the labeling parameter $b_j^i$, $N(V_l = 1)$ represents a number of elements equal to 1 in column l of the matrix V, and L is a number of columns of the coding matrix V.

5. The parameter extraction method for the energy storage management system based on natural language interaction according to claim 4, wherein the parameter vector $b' = (b_{j'}^1, b_{j'}^2, \cdots, b_{j'}^m)$ is calculated in S12, $i = 1,2, \cdots, m$, wherein a calculation formula for $b_{j'}^i$ is:

$$b^i_{j'} = arg \max_{j=1,2,\cdots n_i} \left(\prod_{v'(l)=1} PBV_{ijl} \cdot PB_{ij}\right).$$

6. The parameter extraction method for the energy storage management system based on natural language interaction according to claim 5, wherein according to the naive Bayes formula, a derivation process of the calculation formula for $b^i_{j'}$ is:

$$b^i_{j'} = arg \max_{j=1,2,\cdots n_i} \left(p\left(b^i_j \big| v'\right)\right) = arg \max_{j=1,2,\cdots n_i} \left(\frac{p\left(v' \big| b^i_j\right) \cdot p\left(b^i_j\right)}{p(v')}\right)$$

$$= arg \max_{j=1,2,\cdots n_i} \left(\frac{\prod_{v'(l)=1} PBV_{ijl} \cdot PB_{ij}}{p(v')}\right)$$

$$= arg \max_{j=1,2,\cdots n_i} \left(\prod_{v'(l)=1} PBV_{ijl} \cdot PB_{ij}\right)$$

wherein $p\left(b^i_j \big| v'\right)$ represents a probability of a parameter selection $b^i_j$ of a parameter type *i* when the coding vector of the natural language interaction corpora is *v'*, and *p*(*v'*) represents a probability when the coding vector of the natural language interaction corpora is *v'*.

7. The parameter extraction method for the energy storage management system based on natural language interaction according to claim 1, wherein during parameter labeling in S3, manual parameter value labeling is performed on each parameter type.

8. The parameter extraction method for the energy storage management system based on natural language interaction according to claim 1, wherein when the word segmentation set is constructed in S4, word segmentation is performed on all natural language interaction corpora using a tokenizer, and duplicate removal is performed after word segmentation to obtain the word segmentation set *w.*

9. A computer device, comprising a memory, a processor, and a computer program stored on the memory and executable on the processor, wherein the processor executes the computer program to implement the parameter extraction method for the energy storage management system based on natural language interaction according to any one of claims 1-8.

10. A computer-readable storage medium having a computer program stored thereon, the computer program, when executed by a processor, implementing the parameter extraction method for the energy storage management system based on natural language interaction according to any one of claims 1-8.

FIG. 1

FIG. 2

FIG. 3

## INTERNATIONAL SEARCH REPORT

| International application No. |
| --- |
| **PCT/CN2025/092295** |

**A.    CLASSIFICATION OF SUBJECT MATTER**

G06F 16/33(2025.01)i

According to International Patent Classification (IPC) or to both national classification and IPC

**B.    FIELDS SEARCHED**

Minimum documentation searched (classification system followed by classification symbols)

IPC:G06F

Documentation searched other than minimum documentation to the extent that such documents are included in the fields searched

Electronic data base consulted during the international search (name of data base and, where practicable, search terms used)

CNABS: CNTXT; DWPI; VEN; USTXT; WOTXT; EPTXT; CNKI: 参数, 类型, 集合, 标签, 编码, 向量, 先验概率, 条件概率, 后验概率, parameter, type, set, tag, code, vector, prior probability, conditional probability, posterior probability

**C.    DOCUMENTS CONSIDERED TO BE RELEVANT**

| Category* | Citation of document, with indication, where appropriate, of the relevant passages | Relevant to claim No. |
| --- | --- | --- |
| PX | CN 118427309 A (YUNCHU NEW ENERGY TECHNOLOGY CO., LTD.) 02 August 2024 (2024-08-02)<br>        description, paragraphs 21-49, and claims 1-10 | 1-10 |
| A | CN 109299255 A (DONGGUAN SHUHUI BIG DATA CO., LTD.) 01 February 2019 (2019-02-01)<br>        description, paragraphs 51-86 | 1-10 |
| A | CN 115982369 A (NANJING UNIVERSITY OF POSTS AND TELECOMMUNICATIONS) 18 April 2023 (2023-04-18)<br>        description, paragraphs 29-50 | 1-10 |
| A | CN 116342167 A (CHINA ELECTRONICS STANDARDIZATION INSTITUTE) 27 June 2023 (2023-06-27)<br>        entire document | 1-10 |
| A | US 2021342552 A1 (IBM) 04 November 2021 (2021-11-04)<br>        entire document | 1-10 |

☐ Further documents are listed in the continuation of Box C.          ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **06 August 2025** | **08 August 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2025/092295**

| Patent document cited in search report | | | Publication date (day/month/year) | Patent family member(s) | | | Publication date (day/month/year) |
|---|---|---|---|---|---|---|---|
| CN | 118427309 | A | 02 August 2024 | CN | 118427309 | B | 27 August 2024 |
| CN | 109299255 | A | 01 February 2019 | | None | | |
| CN | 115982369 | A | 18 April 2023 | CN | 115982369 | B | 22 August 2023 |
| CN | 116342167 | A | 27 June 2023 | CN | 116342167 | B | 08 August 2023 |
| US | 2021342552 | A1 | 04 November 2021 | US | 11586829 | B2 | 21 February 2023 |

Form PCT/ISA/210 (patent family annex) (July 2022)